# EUROPEAN PATENT APPLICATION

(11) **EP 1 722 533 A1**
(43) Date of publication of application: **15.11.2006**
(21) Application number: 06009851.4
(22) Date of filing: 12.05.2006
(51) Int. Cl.: H04L 29/06

(54) **Methods and apparatuses for acquiring CSI service information in IMS network**

(30) Priority: 13.05.2005 KR 20050040347
(71) Applicant: Samsung Electronics Co., Ltd., Suwon-si Gyeonggi-do (KR)
(72) Inventor: Bae, Eun-Hui, Yeongtong-gu Suwon-si, Gyeonggi-do (DE); Choi, Sung-Ho, Yeongtong-gu Suwon-si, Gyeonggi-do (DE); Song, O-Sok, Yeongtong-gu Suwon-si, Gyeonggi-do (DE); Lim, Han-Na, Yeongtong-gu Suwon-si, Gyeonggi-do (DE)
(74) Representative: Grünecker, Kinkeldey, Stockmair & Schwanhäusser Anwaltssozietät

(57) **Abstract**

A system and method are provided for acquiring service information in an IP Multimedia Subsystem (IMS) network, which includes the steps of transferring, by a Mobile Station (MS), an IMS registration request message to the IMS network in order to use an IMS service, the MS supporting a CSI (Combinational CS (Circuit Switching) and IMS) service, and receiving a response message corresponding to the IMS registration request message from the IMS network and checking service information included in the response message.

## Description

### BACKGROUND OF THE INVENTION

### Field of the Invention:

The present invention relates to a CSI (Combinational CS (Circuit Switching) and IMS (IP Multimedia Subsystem) service). More particularly, the present invention relates to technology for acquiring service information provided from a CS network in an IMS network.

### Description of the Related Art:

Currently, a CSI, which is technology necessary for simultaneously providing a CS service and an IMS service, is being discussed by a 3^{rd} Generation Partnership project (3GPP). In an IMS network supporting such a CSI, the characteristics of various types of services and Supplementary Services (SSs) provided in a CS service network must be maintained in the same way, even when these services are used with an IMS service at the same time. Hereinafter, a user identity restriction service through Calling Line Identification Restriction (CLIR) and Connected Line Identification Restriction (COLR) will be described as the CS SS.

Assuming for example, that a Mobile Station (MS) always supports a combining service, i.e. a CSI, when the MS exists in a network supporting the CSI, an SS provided in a CS network must also be provided in an IMS network in the same way. For example, even when a user having joined a CLIR/COLR service simultaneously makes use of a CSI service and an IMS service, the characteristic of a CS service should not be affected by the leakage of the sender's identity information through an IMS network.

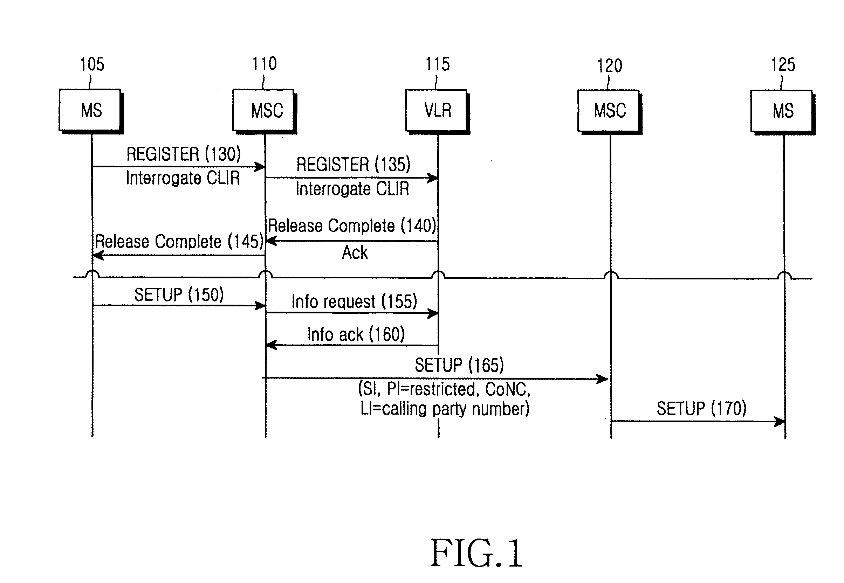

FIG. 1 is a ladder diagram illustrating a conventional application process of a CS CLIR service.

As illustrated in FIG. 1, in step 130, a transmission-side MS 105 transmits a registration message including an information request for a CLIR service to a transmission-side Mobile Switching Center (MSC) 110 through a CS network. In step 135, the MSC 110 transmits the registration message to a Visitor Location Register (VLR) 115.

In step 140, the VLR 115 transmits a release complete message including information on the CLIR service to the MSC 110 according to the CLIR service information request included in the registration message. In step 145, the MSC 110 transmits the release complete message to the MS 105. Accordingly, the MS 105 acquires the information on the CLIR service.

In step 150, for a CS call setup, the MS 105 transmits a setup message, which includes information regarding whether the CLIR service is to be provided, to the MSC 110. In step 155, the MSC 110 transmits an information request message to the VLR 115 based on the information regarding whether the CLIR service is to be provided. In step 160, the VLR 115 transmits an information acknowledgment message to the MSC 110. In this way, the MSC 110 confirms if the CLIR service can be provided, and then directly performs processing for identity restriction. In step 165, the MSC 110 transmits the setup message to a reception-side MSC 120. In step 170, the MSC 120 transmits the setup message to a reception-side MS 125. In this way, it is possible to use the CLIR service.

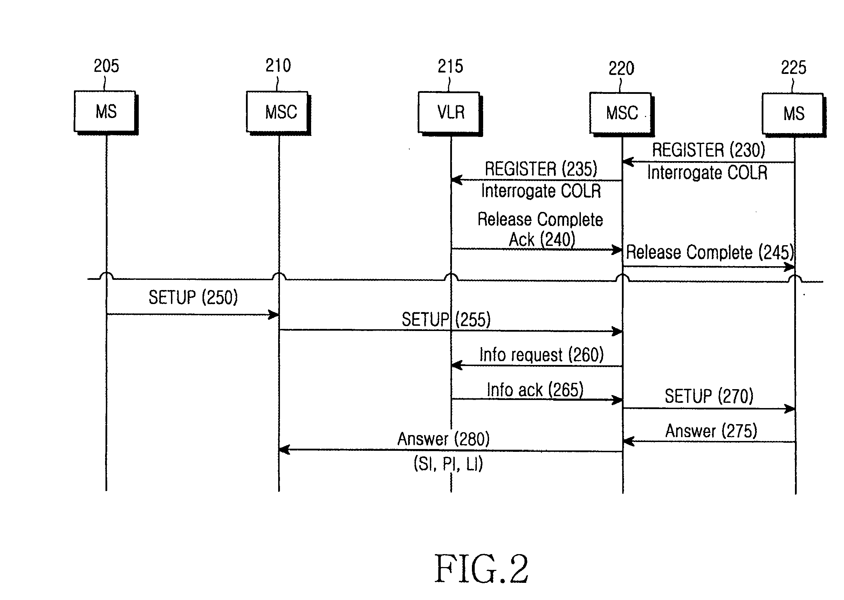

FIG. 2 is a ladder diagram illustrating a conventional application process of a CS COLR service.

In step 230, a reception-side MS 225 transmits a registration message including an information request for a COLR service to a reception-side MSC 220 through a CS network. In step 235, the MSC 220 transmits the registration message to a VLR 215.

In step 240, the VLR 215 transmits a release complete message including information on the COLR service to the MSC 220 according to the COLR service information request included in the registration message. In step 245, the MSC 220 transmits the release complete message including the information on the COLR service to the MS 225. Accordingly, the MS 225 acquires the information on the CLIR service from the VLR 215.

In step 250, a transmission-side MS 205 transmits a setup message requesting a call setup to a transmission-side MSC 210. In step 255, the transmission-side MSC 210 transfers the setup message to the reception-side MSC 220. In step 260, the reception-side MSC 220 transmits an information request message to the VLR 215 in order to check information regarding whether the COLR service can be provided to the reception-side MS 225. In step 265, the VLR 215 transmits an information acknowledgment message, which represents that the COLR service can be provided to the MS 225, to the MSC 220 in response to the information request message. In step 270, the MSC 220 forwards the setup message to the MS 225.

In a case in which an answer message corresponding to the setup message is forwarded to the reception-side MSC 220 in order to be transferred to the transmission-side MS 205 in step 275, the MSC 220 modifies the identity information of the MS 225 to prevent transmission to MS 205, and transfers the answer message to the transmission-side MSC 210, in step 280.

As in the case of the conventional CLIR/COLR service provided as described above, SSs provided as a separate service through the CS network and the IMS network must also be provided in the same way in a network supporting the CSI. However, according to the current technology, as a CS service and an IMS service are simultaneously provided through the CSI, a service provided in the CS network may not function properly. For example, since the CLIR/COLR service provided through the CS network is used together with the IMS service, user's identity information may be leaked through the IMS network. Such a problem corresponds to one example in which the CS service is not properly provided due to the support of the CSI scheme.

Accordingly, a need exists for a system and method for effectively and efficiently acquiring service information provided from a CS network in an IMS network.

### SUMMARY OF THE INVENTION

Accordingly, an aspect of exemplary embodiments of the present invention is to substantially address the above-mentioned and other problems occurring in the conventional systems, and it is an object of exemplary embodiments of the present invention to provide a method and an apparatus for providing various types of services and SSs, which are provided in a CS service network, in an IMS network in the same way.

It is another object of exemplary embodiments of the present invention to provide a method and an apparatus for allowing an IMS network to automatically acquire information on services provided in a CS network.

It is another object of exemplary embodiments of the present invention to provide a method and an apparatus for allowing an MS to acquire CS service information through an IMS network in an environment in which a CS service and an IMS service are simultaneously used, thereby completely providing the characteristics of each service.

In accordance with one aspect of exemplary embodiments of the present invention, a method is provided for acquiring service information in an IP Multimedia Subsystem (IMS) network, the method comprising the steps of transferring, by a Mobile Station (MS), an IMS registration request message to the IMS network in order to use an IMS service, the MS supporting a CSI (Combinational CS (Circuit Switching) and IMS) service, and receiving a response message corresponding to the IMS registration request message from the IMS network and checking service information included in the response message.

In accordance with another aspect of exemplary embodiments of the present invention, a method is provided for acquiring service information in an IP Multimedia Subsystem (IMS) network, the method comprising the steps of receiving an IMS registration message for using an IMS service from a Mobile Station (MS) supporting a CSI (Combinational CS (Circuit Switching) and IMS) service and after receiving the IMS registration message, generating a Server Assignment Request command (SAR) message for requesting subscriber information and service information for the MS, transferring the SAR message to a Home Subscriber Server (HSS), and receiving a response message comprising the subscriber information and the service information from the HSS.

In accordance with yet another aspect of exemplary embodiments of the present invention, an apparatus is provided for acquiring service information in an IP Multimedia Subsystem (IMS) network, the apparatus comprising a message generator for generating, by a Mobile Station (MS), an IMS registration request message in order to use an IMS service, the MS supporting a CSI (Combinational CS (Circuit Switching) and IMS) service, a transmitter for transmitting the IMS registration request message to an IMS network, a receiver for receiving a response message corresponding to the registration request message from the IMS network, and a processor for checking service information included in the response message.

In accordance with still another aspect of exemplary embodiments of the present invention, an apparatus is provided for acquiring service information in an IP Multimedia Subsystem (IMS) network, the apparatus comprising a Mobile Station (MS) transceiver for receiving an IMS registration message for using an IMS service from an MS supporting a CSI (Combinational CS (Circuit Switching) and IMS) service, a processor for generating a Server Assignment Request command (SAR) message for requesting subscriber information and service information for the MS according to the IMS registration message, and a Home Subscriber Server (HSS) transceiver for transmitting the SAR message to an HSS and receiving a Server Assignment Answer (SAA) message including the subscriber information and the service information from the HSS in response to the SAR message.

### BRIEF DESCRIPTION OF THE DRAWINGS

The above and other objects, features and advantages of exemplary embodiments of the present invention will become more apparent from the following detailed description taken in conjunction with the accompanying drawings, in which:
FIG. 1 is a ladder diagram illustrating a conventional application process of a CS CLIR service;
FIG. 2 is a ladder diagram illustrating a conventional application process of a CS COLR service;
FIG. 3 is a ladder diagram illustrating an exemplary operation in which a CSI MS acquires and utilizes CS service information through an IMS registration process according to a first exemplary embodiment of the present invention;
FIG. 4 is a ladder diagram illustrating an exemplary case in which CSI indication is not transferred from an MS to an IMS network according to the first exemplary embodiment of the present invention;
FIG. 5 is a ladder diagram illustrating an exemplary case in which CSI indication is transferred from an MS to an IMS network according to a second exemplary embodiment of the present invention;
FIG. 6 is a ladder diagram illustrating an exemplary case in which CSI indication is not transferred from an MS to an IMS network according to the second exemplary embodiment of the present invention;
FIG. 7 is a flow diagram illustrating an exemplary operation of an MS according to the first and second exemplary embodiments of the present invention;
FIGs. 8A and 8B are flow diagrams illustrating an exemplary operation process of an IMS CN according to the first and second exemplary embodiments of the present invention;
FIG. 9 is a block diagram illustrating an exemplary structure of an MS according to the first and second exemplary embodiments of the present invention; and
FIG. 10 is a block diagram illustrating an exemplary structure of an IMS network according to the first and second exemplary embodiments of the present invention.

Throughout the drawings, the same drawing reference numerals will be understood to refer to the same elements, features, and structures.

### DETAILED DESCRIPTION OF EXEMPLARY EMBODIMENTS

Hereinafter, exemplary embodiments of the present invention will be described in detail with reference to the accompanying drawings. In the following description, a detailed description of known functions and configurations incorporated herein will be omitted for clarity and conciseness. Terms described in the following description can be defmed by taking functions thereof into consideration, so they may vary according to intentions of a user and an operator, or depending on custom. Accordingly, the terms should be defined based on the entire content of the following description.

Embodiments of the present invention propose technology for allowing information on services provided in a CS network to be automatically acquired in an IMS network. Specifically, the technology allows an MS to acquire CS service information through an IMS network in an environment CSI in which a CS service and an IMS service are simultaneously used, thereby completely providing the characteristics of each service. Further, exemplary embodiments of the present invention are applicable to all environments in which CS service information may be required for an IMS service in the future, in addition to a case in which a CS service and the IMS service are simultaneously used.

In exemplary embodiments of the present invention, a CS SS is utilized in order to propose technology for allowing an IMS network to acquire information on services provided in a CS network. Specifically, exemplary embodiments of the present invention describe a method for allowing an IMS network to acquire CS service information through an embodiment placing focus on an identity restriction service of various CS services. A CS SS can be described as a service requiring a user's action and a service in which automatic processing is accomplished in a network with no separate user action except for a joining procedure.

Subject matter of the present invention is described through a first exemplary embodiment, which requires additional operations of an IMS MS for a CS service, and a second exemplary embodiment, which does not require additional operations of an IMS MS, while placing focus on an identity restriction service. However, embodiments of the present invention can also be applied to all kinds of services and SSs, which are provided in a CS network, in substantially the same way.

### First Exemplary Embodiment (case of requiring operation of an MS)

In the first exemplary embodiment, in the case of a CS service requiring the operation of an IMS MS, both the operation of an MS for requesting CS service information and the operation of an IMS network for acquiring CS service-related information and allowing the functions of the CS service and a CS SS to also be provided in the IMS network, will be described in order to exemplify a CLIR/COLR service in a case of setting a mode which requires the operation of an MS as a default. Further, the case of requiring the operation of the MS is classified as a case of including CSI indication in an IMS registration step of an MS and a case of having no CSI indication, and an operation in which the IMS network or the IMS MS acquires the CS service-related information will be described.

### 1-1. A case in which CSI indication is transferred from an MS to an IMS network.

A CSI MS can determine if the CSI MS is a CSI MS. However, the IMS network cannot become aware of information regarding whether an MS performing a registration request is a CSI MS. Accordingly, the CSI indication is included in a registration request message generated by the CSI MS, so that it is utilized as triggering information for acquiring CS service information described in exemplary embodiments of the present invention.

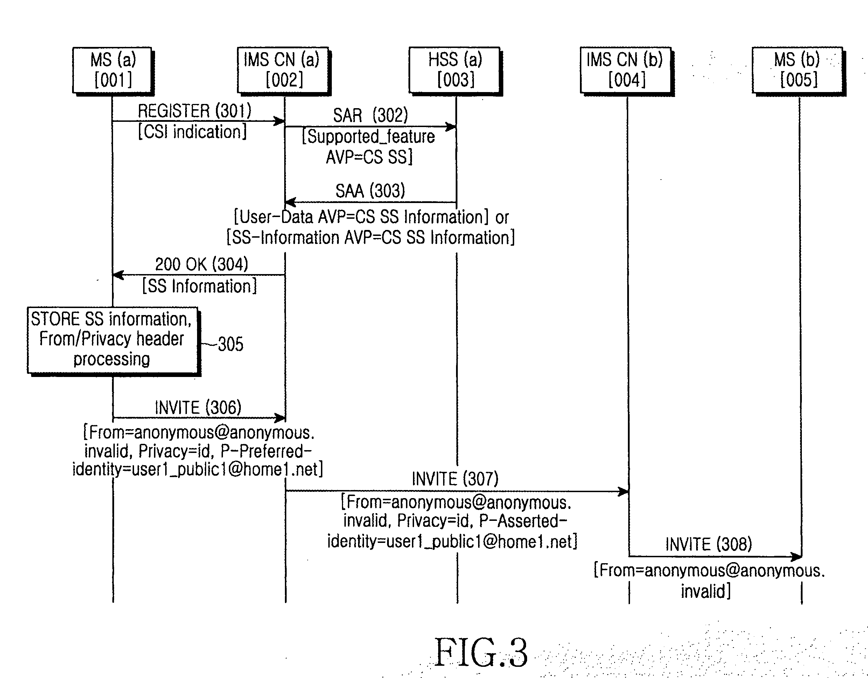

FIG. 3 is a ladder diagram illustrating an exemplary operation in which a CSI MS acquires and utilizes CS service information through an IMS registration process according to the first exemplary embodiment of the present invention.

FIG. 3 shows a case in which CSI indication is transferred from an MS to an IMS network. In step 301, the MS 001 transfers an IMS registration message to an IMS Core Network (CN) 002 for registration to an IMS service. The IMS registration message includes CSI indication reporting that the MS 001 is a CSI-capable MS. In step 302, the IMS CN 002 having received the IMS registration message requests a Home Subscriber Server (HSS) 003 to provide CS service information through a Server Assignment Request command (SAR) message necessary for performing a registration process.

Exemplary embodiments of the present invention propose three exemplary methods in order to request the CS service information, but are not limited thereto. A first method proposes that a feature flag requesting SS information of a corresponding user is to be set in a supported-feature Attribute-Value Pairs (AVP) within the SAR. A second method defines a new AVP in order to request the CS service information. Tables 1 and 2 below show by way of example, exemplary formats of the SAR message and the supported-feature AVP. Herein, the method for defining the new AVP and an assignment of a new number for a feature flag substantially conform to a method defined in a 3GPP specification and the diameter protocol of an Internet Engineering Task Force (IETF).

A third method defines a new diameter request command message. The new diameter request command message is used in order to request both CS service information and CSI-related information, e.g. a new charging id, a new charging vector, and so forth, when the use of a CSI affects charging.

**Table 1**

| | |
|---|---|
| <Server-Assignment-Request> = | <Diameter Header:301.REQ.PXY.16777216> |
| <Session-id> | |
| | {Vendor-Specific-Application-Id} |
| | {Auth-Session-State} |
| | {Origin-Host} |
| | {Origin-Realm} |
| | [Destination-Host] |
| | { Destination-Realm} |
| | {User-Name} |
| | *[Supported-Features] |
| | * [Public-Identity] |
| | {Server-Name} |
| | {Server-Assignment-Type} |
| | {User-Data-Already-Available} |
| | *[AVP] |
| | *[Proxy-Info] |
| | *[Route-Record] |

**Table 2**

| | |
|---|---|
| Supported-Features = | <AVP header: xx> |
| | {Vendor-ID} |
| | {Feature-List-ID} |
| | { Feature-List } |
| | *{AVP} |

The HSS 003 having received the SAR message in step 302, searches for the CS service information on the MS 001 having requested the registration. Herein, the HSS 003 has a database for storing subscriber information of an IMS network and a CS network, which are managed by service providers. The CS service information includes information on SSs, which can be provided by the CS network, modes (e.g. permanent, temporary) in which each SS is provided, basic default values for each SS, and so forth. In step 303, the HSS 003 inserts the searched CS service information into a Server Assignment Answer (SAA) message, and transfers the SAA message to the IMS CN 002.

Exemplary embodiments of the present invention define three exemplary methods for transferring the CS service information, but are not limited thereto. According to a first method, a new AVP, e.g. an SS-information AVP, is defined in the SAA message and the CS service information is transferred to the IMS CN 002 through the AVP. According to a second method, SS information may also be transferred through the user data AVP previously defined in the SAA message. Herein, an SS conforms to an XML format which is a standard format of the user data AVP. Table 3 below shows by way of example, an exemplary format of the SAA message. According to a third method, a new command, i.e. a new diameter answer message, is generated. The newly defined diameter command message is used in order to transfer the CS service information and CSI specific information in a network supporting the CSI.

**Table 3**

| | |
|---|---|
| <Server-Assignment-Answer> = | <Diameter Header:301.PXY.16777216> |
| <Session-Id> | |
| | {Vendor-Specific-Application-Id} |
| | [Result-Code] |
| | [Experimental-Result] |
| | {Auth-Session-State} |
| | {Origin-Host} |
| | {Origin-Realm} |
| | {User-Name} |
| | * [Supported-Features] |
| | [User-Data] |
| | [Charging-Information] |
| | *[AVP] |
| | *[Failed-AVP] |
| | *[Proxy-Info] |
| | *[Route-Record] |

The IMS CN 002 having received the SAA message in step 303 extracts the CS service information from the SAA message, and transfers the CS service information to the MS 001 through a Session Description Protocol (SDP) within a 200 OK message in step 304. In addition to a method for using the 200 OK message in order to transfer the CS service information, it may be possible to define a new response message, e.g. a 1xx informational response message or a 2xx success response message, or a new type of network-initiated message or a notify message, and to transfer the CS service information to the MS 001.

In step 305, the MS 001 acquires information regarding whether to support an identity restriction service, regarding a support mode of the identity restriction service, and so forth, based on the received CS service information. In step 306, the MS 001 sets values for identity restriction in an invite message requesting the IMS service, and transmits the invite message in order to request the IMS CN 002 to provide the IMS service.

In detail, in step 305, the MS 001 stores the received CS service information, and sets values of the "From" header and the "Privacy" header within the invite message in order to realize a user identity restriction function.

In step 307, the IMS CN 002 transmits the invite message to an IMS CN 004. In step 308, the IMS CN 004 transmits the invite message to an MS 005. Detailed processing for performing the identity restriction in the IMS in steps 306 to 308 substantially conform to the process defined in the existing 3GPP standard.

### 1-2. A case in which CSI indication is not transferred from an MS to an IMS network.

Herein, the CSI MS does not add the CSI indication in a process of performing a registration request to the IMS network. In the IMS network, the IMS network transmits a CS service information request to an HSS regardless of whether an MS having requested registration is an MS capable of supporting the CSI, and transfers the CS service information to the MS. An MS, which does not support the CSI, ignores the CS service information.

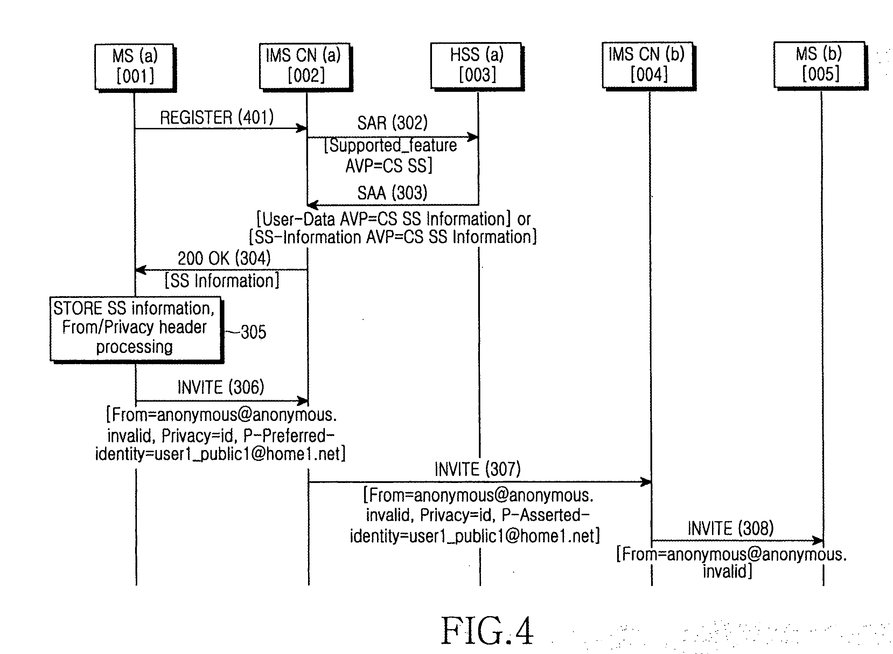

FIG. 4 is a ladder diagram illustrating an exemplary case in which CSI indication is not transferred from an MS to an IMS network according to the first embodiment of the present invention.

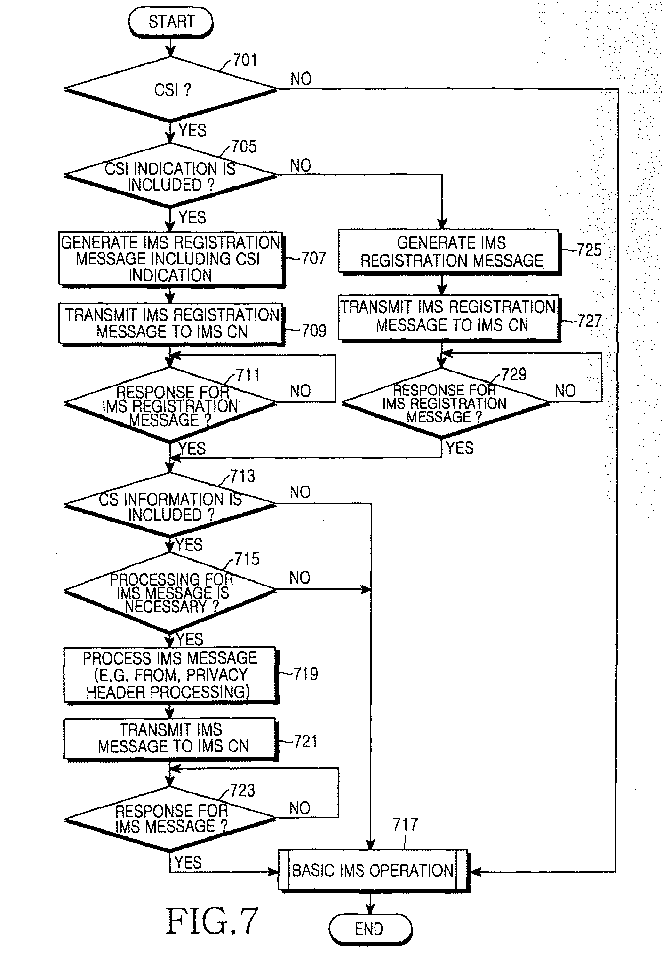

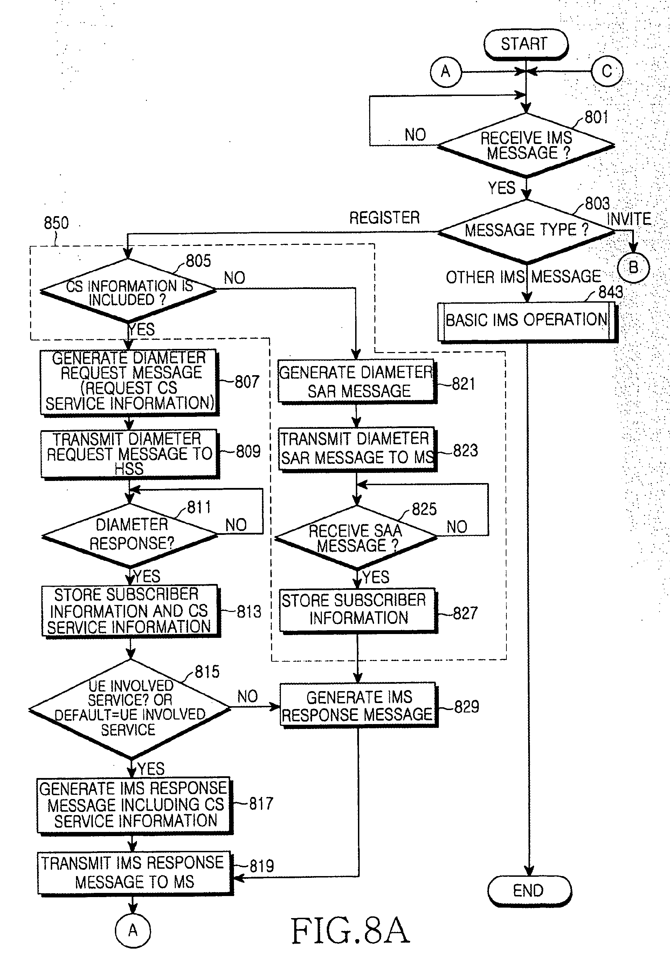

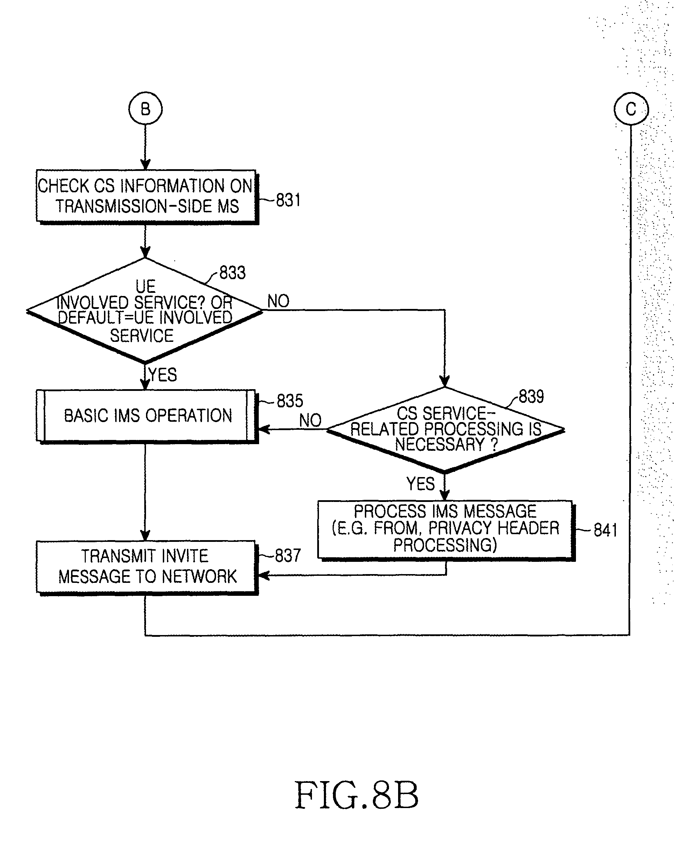

The process of FIG. 4 is substantially the same as that of FIG. 3, except that the MS 001 transmits the IMS registration message with no CSI indication to the IMS CN 002 in step 401. However, there also exists differences in the internal processing operations of the MS 001 and the IMS CN 002. This will be described with reference to FIGs. 7 and 8 illustrating the operations of an MS and an IMS network.

### Second Exemplary Embodiment (MS not involved case)

In the second exemplary embodiment, in the case of a CS service not requiring the operation of an IMS MS, a method in which an IMS network or an IMS MS acquires CS service-related information will be described, distinguishing a case of including CSI indication in an IMS registration step from a case of having no CSI indication.

In addition, in the case of a CS service requiring the operation of an MS or not requiring the operation of the MS according to basic default values, it is assumed that the CS service is included in the first exemplary embodiment or the second exemplary embodiment according to a case-by-case basis.

In the second exemplary embodiment, in order to effectively describe a service not requiring the operation of an MS, when a CLIR/COLR service setting a mode not requiring the operation of the MS as a default is provided, the operation of the IMS network for acquiring the CS service-related information and allowing the functions of the CS service and a CS SS to be provided in the IMS network will be described.

Further, in order to provide a service, a case of not requiring the operation of the MS will also be described, distinguishing a case where the CSI indication is transferred from the MS in an IMS registration from a case where the CSI indication is not transferred from the MS.

### 2-1. A case in which CSI indication is transferred from an MS to an IMS network.

Herein, the CSI indication is included in a registration request message generated by a CSI MS, so that it is utilized as triggering information for acquiring CS service information described in exemplary embodiments of the present invention.

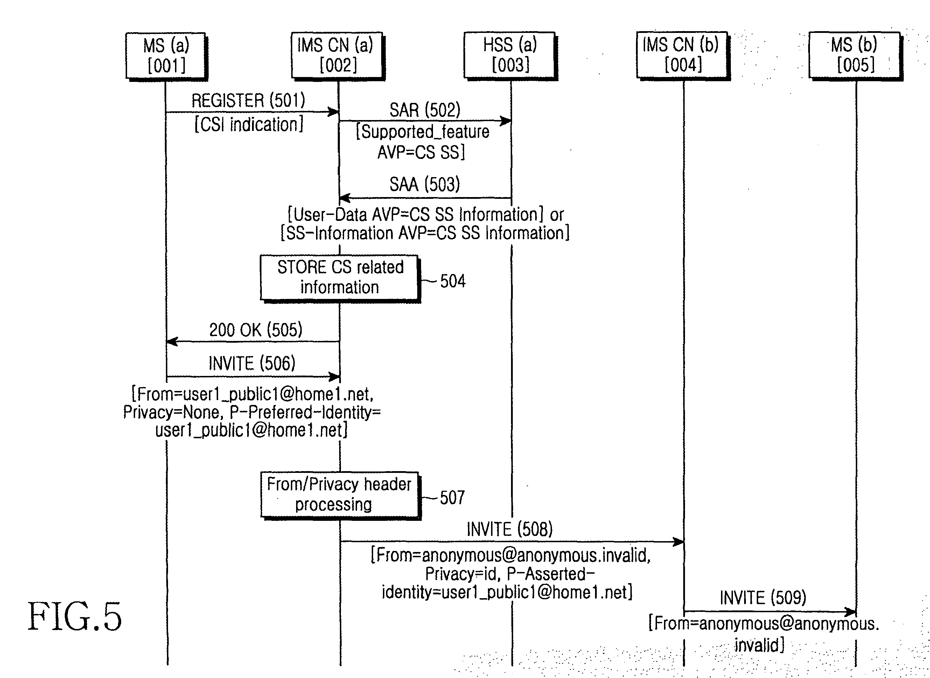

FIG. 5 is a ladder diagram illustrating an exemplary case in which CSI indication is transferred from an MS to an IMS network according to the second embodiment of the present invention.

FIG. 5 illustrates a method in which the IMS network 002 stores and utilizes CS service information on each MS while a CSI MS performs an IMS registration process.

In step 501, the MS 001 transfers an IMS registration message including CSI indication to an IMS CN 002. In step 502, the IMS CN 002 having received the IMS registration message requests an HSS 003 to provide subscriber information and CS service information through an SAR message. In step 503, the HSS 003 transfers stored subscriber information and CS-related information to the IMS CN 002 through an SAA message. Herein, the request for the subscriber information and the CS service information, which are included in the SAR message, and the insertion of the subscriber information and the CS service information into the SAA message, are performed in substantially the same way as in the first exemplary embodiment.

However, unlike the first exemplary embodiment, the IMS CN 002 in the second embodiment stores the CS service information received from the HSS 003, and then performs a process necessary for realizing a specific service by means of the stored CS service information when a service request message, e.g. an invite message, is received from the corresponding MS 001.

In step 504, the IMS CN 002 stores the CS service information. In step 505, the IMS CN 002 transmits a response message 200 OK to the MS 001 in response to the registration message. Herein, the response message 200 OK does not include CS service-related information. Then, the MS 001 having completed the registration process has only to perform a normal IMS service request process. That is, in the case of a service not requiring the operation of an MS, additional impact for an MS does not occur in the step of receiving an IMS service request/response, except for a registration step.

In step 506, the MS 001 transfers an invite message to the IMS CN 002 for an IMS service. The invite message is generated in substantially the same way as an invite message generated in an existing IMS. In step 507, if there exists a function which must be provided in relation to the CS service by means of the CS information acquired in the IMS registration step, the IMS CN 002 having received the invite message sets values of the "From" header and the "Privacy" header within the invite message as anonymous@anonymous.invalid and a specific ID value, respectively, in order to provide the corresponding function, i.e. to realize a user identity restriction function. Then, the invite message processed by the IMS CN 002 as described above, is transferred to an IMS CN 004 in step 508. In step 509, the IMS CN 004 transfers the received invite message to an MS 005. Then, a procedure for processing the user identity restriction within the message conforms to the existing 3GPP standard specification.

### 2-2. A case in which CSI indication is not transferred from an MS to an IMS network.

Herein, even when the CSI indication is not transferred from the MS, the IMS network automatically acquires CS service information on an MS during an IMS registration process.

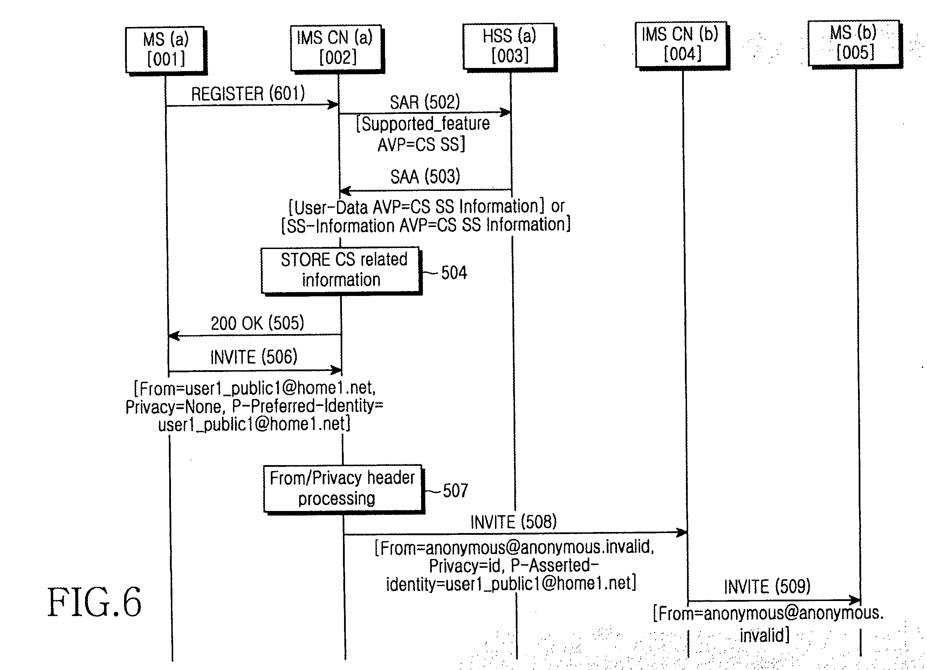

FIG. 6 is a ladder diagram illustrating an exemplary case in which CSI indication is not transferred from an MS to an IMS network according to the second embodiment of the present invention.

The process of FIG. 6 is substantially the same as that of FIG. 5, except that the MS 001 transmits the IMS registration message with no CSI indication to the IMS CN 002 in step 601. However, other differences are present in the internal processing operations of the MS 001 and the IMS CN 002. A number of such differences are described in greater detail below with reference to FIGs. 7 and 8 illustrating the operations of an MS and an IMS network.

FIG. 7 is a flow diagram illustrating an exemplary operation of an MS according to the first and the second embodiments of the present invention.

In step 701, when the MS attempts to perform a registration procedure in order to use the IMS service, the MS determines if the MS is an MS supporting the CSI before generating a registration request message. If the MS is an MS not supporting the CSI, the MS performs a basic IMS operation in step 717.

However, if the MS is an MS supporting the CSI, the MS may operate differently in two exemplary cases in step 705: a case in which the MS transfers a registration message including CSI indication; and a case in which the MS transfers a registration message with no CSI indication. The CSI indication included in the registration message enables determination regarding whether an IMS CN is to receive CS service information through an HSS. However, when the registration message does not include the CSI indication, it is assumed for example, that the IMS CN always operates to receive the CS service information through the HSS.

When the MS operates in the case where the CSI indication is included in the registration message as determined in step 705, the MS generates an IMS registration request message including the CSI indication in step 707, and transmits the generated IMS registration request message to the IMS CN in step 709.

In step 711, the MS waits for a predetermined response for the transmitted IMS registration request message. The response can comprise an error response, a failure response, or a response message 200 OK, however, the flow chart of FIG. 7 does not illustrate a procedure for a case in which an error response or a failure response for the IMS registration request message is received from the IMS CN. In such a case, it is assumed for example, that the basic IMS operation principle is applied as in step 717.

When a response message 200 OK for the IMS registration request message is received from the IMS CN in step 711, the MS determines if the response message includes CS service-related information in step 713. The transmission of the response message including the CS service-related information to the MS means that the operation of the MS is required in order to support the CS service in the IMS network.

A case of requiring the operation of the MS may be classified as two cases: a case in which a service is a CS service operating as a service always requiring the operation of the MS, wherein the support of the MS is also necessary for an IMS network; and a case in which a service is a CS service operating as a default value-based service, wherein a default value is set so that whether a service is to be provided is determined according to the request of the MS.

If the response message includes the CS service-related information in step 713, step 715 is performed. That is, even when the response message includes the CS service-related information, it is then determined whether direct processing of an IMS MS for an IMS message is necessary. Accordingly, in the case of a service not requiring the direct processing of the IMS MS for the IMS message, step 717 is performed. That is, the basic IMS operation principle is applied.

However, when the direct processing is necessary for properly providing the CS service in step 715, step 719 is performed. That is, the MS modifies, inserts, and otherwise processes, information necessary for the IMS message, and generates an IMS message, i.e. an invite message, which includes an IMS service request message for requesting the IMS CN to provide an IMS service. In step 721, the MS transmits the generated IMS message to the IMS CN.

In step 723, the MS waits to receive a response message for the transmitted IMS message. If the response message is received from the IMS CN, step 717 is performed. That is, the basic IMS operation is performed.

When the MS operates in the case where the CSI indication is not included in the IMS registration message in step 705, the MS generates a general IMS registration request message with no CSI indication in step 725, and transmits the generated IMS registration request message to the IMS CN in step 727.

In step 729, the MS waits to receive a response message for the transmitted IMS registration request message. If the response message is received from the IMS CN, step 713 is performed in order to determine if the response message includes the CS service information. Then, steps 713, 715, 717, 719, 721 and 723 are performed as described above.

FIGs. 8A and 8B are flow diagrams illustrating an exemplary operation process of an IMS CN according to the first and the second exemplary embodiments of the present invention.

In step 801, the IMS CN always waits to receive an IMS Session Initiation Protocol (SIP) message from an MS. If the IMS SIP message is received from the MS, step 803 is performed.

In step 803, the IMS CN performs different operations according to the type of the IMS SIP message received from the MS. Herein, only a registration message and an invite message relating to exemplary embodiments of the present invention will be described for illustration purposes, but are not limited thereto.

When the IMS SIP message received from the MS corresponds to an IMS registration message, the IMS CN determines if the IMS SIP message includes CSI indication in step 805.

If the IMS SIP message includes the CSI indication in step 805, step 807 is performed. That is, the IMS CN generates a diameter request message for requesting an HSS to provide subscriber information and CS service information for an MS by means of the schemes described through the embodiments of the present invention.

The diameter request message may also correspond to a message, which is obtained by adding a new AVP or a flag to an existing SAR message, or a completely new diameter request message for performing functions defined in exemplary embodiments of the present invention.

In step 809, the IMS CN transmits the generated diameter request message to the HSS. In step 811, the IMS CN waits to receive a diameter response message for the transmitted diameter request message from the HSS.

When the diameter response message is received from the HSS, the IMS CN stores the subscriber information and the CS service information included in the diameter response message in step 813. In step 815, the IMS CN then determines if a service, which the MS has joined in the CS network, corresponds to a service requiring the operations of the MS based on the acquired subscriber information and CS service information.

When the MS has joined a service not requiring the operation of the MS, the IMS CN generates a response message for informing the MS of the completion of the registration in step 829. In step 819, the IMS CN transmits the generated response message to the MS. Then, the operation process returns to step 801.

However, when the MS has joined a service requiring the operation of the MS, step 817 is performed. That is, the IMS CN generates an IMS SIP response message, e.g. 200 OK, for the IMS registration message of the MS. The IMS SIP response message includes information on the CS service requiring the operation of the MS. In step 819, the IMS CN transfers the generated IMS SIP response message to the MS. Then, the operation process returns to step 801.

If the IMS SIP message does not include the CSI indication in step 805, step 821 is performed. That is, the IMS CN generates a diameter SAR message for requesting the HSS to provide the subscriber information in the existing manner. In step 823, the IMS CN transmits the generated diameter SAR message to the HSS.

In step 825, the IMS CN waits to receive an SAA message, which is a response message for the diameter SAR message, from the HSS. When the SAA message is received from the HSS, the IMS CN stores the subscriber information included in the SAA message in step 827, and generates a response message for informing the MS of the completion of the registration in step 829. In step 819, the IMS CN transmits the generated response message to the MS. Then, the operation process returns to step 801.

In step 850 including steps 805, 821, 823, 825 and 827, the IMS CN receives a basic IMS registration message, instead of processing the IMS registration message based on the CSI indication. When the IMS CN always operates to request the HSS to provide the CS service information according to the IMS registration message received from the MS, regardless of whether the IMS registration message includes the CSI indication, step 850 may be omitted. Further, if the IMS CN receives the IMS registration message in step 803, step 807 may be directly performed.

When the IMS CN receives an invite message from the MS in step 803, step 831 of FIG. 8B is performed. That is, the IMS CN checks the CS information stored in the registration step of the MS.

In step 833, the IMS CN determines if a service, which the MS has joined in the CS network, corresponds to a service requiring the operations of the MS based on the checked CS information. When the MS has joined a service requiring the operation of the MS, step 835 is performed. That is, since processing for service-providing has been performed for the invite message received from the MS in step 831, the IMS CN has only to process the invite message by means of an existing scheme for processing the IMS message, without a separate addition processing.

In step 837, the IMS CN transmits the processed invite message to a network for transmission to a reception-side. Then, the operation process returns to step 801.

When the service does not correspond to a service which is to be processed by the MS in step 833, step 839 is performed. That is, the IMS CN determines if additional processing in the IMS network is necessary for the service being provided by the CS network. When the processing is necessary, step 841 is performed. Otherwise, step 835 is performed.

When the additional processing in the IMS network is necessary for the CS service, the IMS CN modifies the received invite message in step 841. In step 837, the IMS CN transmits the invite message processed in step 835 to the network for transmission to the reception-side. Then, the operation process returns to step 801.

When other messages are received from the MS in step 803, except for the registration message and the invite message, step 843 is performed. That is, the IMS CN performs a basic IMS operation.

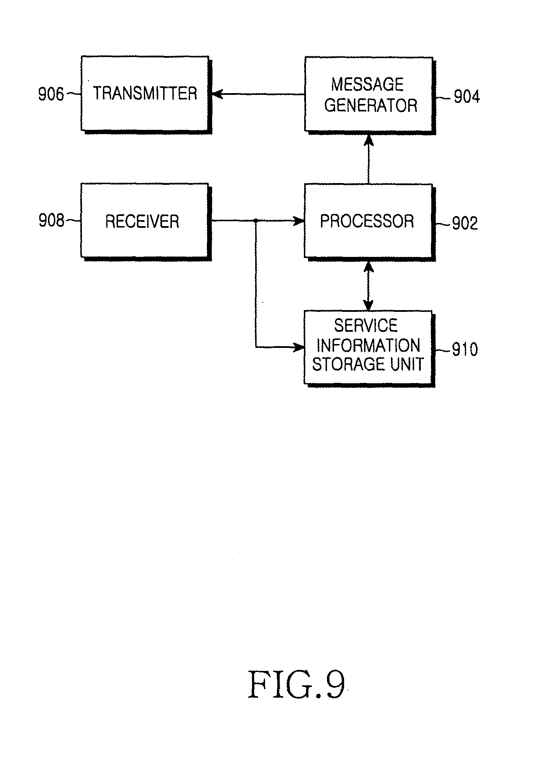

FIG. 9 is a block diagram illustrating an exemplary structure of an MS according to the first and the second embodiments of the present invention.

The exemplary structure comprises a processor 902, a message generator 904, a transmitter 906, a receiver 908, and a service information storage unit 910. The receiver 908 receives a response message corresponding to a registration request from the IMS network. The received response message may include CS service information. A case in which the CS service information is included in the response message and transferred corresponds to a case of requiring the processing operation of the MS.

The processor 902 checks the CS service information. As a result of the check, when the CS service corresponds to the service requiring the processing of the MS, the processor 902 modifies or inserts information on the service requiring the processing of the MS, and transfers the CS service information to the message generator 904.

The message generator 904 generates an IMS registration message in order to allow the MS supporting the CSI to use the IMS service. Herein, the IMS registration message may also include CSI indication representing that the MS supports the CSI service. Further, the message generator 904 generates an IMS service request message by means of the CS service information received from the processor 902, and transfers the generated IMS service request message to the transmitter 906.

The transmitter 906 transmits the received IMS service request message to the IMS network. Further, the transmitter 906 receives the IMS registration message generated by the message generator 904, and also transmits the IMS registration message to the IMS network.

In the case of the service requiring the processing of the MS from the result of the check by the processor 902, the service information storage unit 910 stores the CS service information in order to process the CS service.

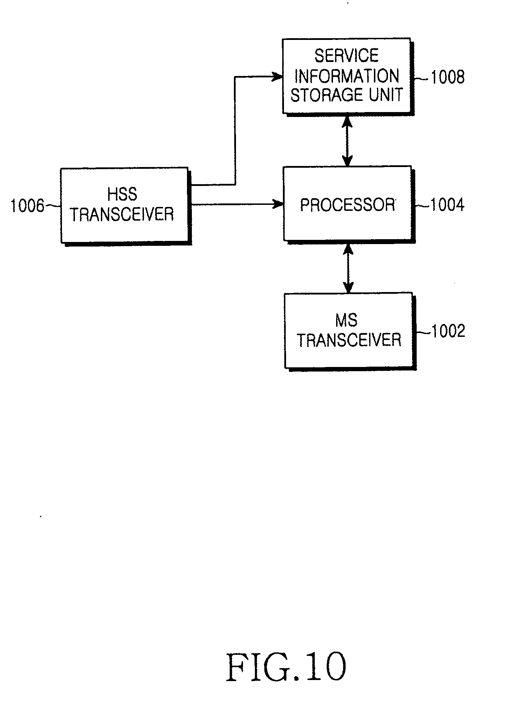

FIG. 10 is a block diagram illustrating an exemplary structure of an IMS network according to the first and the second embodiments of the present invention.

The exemplary structure comprises an MS transceiver 1002, a processor 1004, an HSS transceiver 1006, and a service information storage unit 1008. The MS transceiver 1002 receives an IMS registration message for using the IMS service from an MS supporting the CSI service, wherein the IMS registration message may include CSI indication.

The HSS transceiver 1006 transmits an SAR request message to an HSS, and receives an SAA message including subscriber information and CS service information from the HSS.

The processor 1004 receives the IMS registration message from the MS transceiver 1002, and checks the CSI indication included in the IMS registration message. Then, the processor 1004 generates an SAR request message for requesting the subscriber information and the CS service information, and transfers the SAR request message to the HSS transceiver 1006. Herein, even when the CSI indication is not included in the IMS registration message transferred to the processor 1004 according to setup schemes, the processor 1004 may also generate the SAR request message, and transfer the SAR request message to the HSS transceiver 1006.

The HSS transceiver 1006 checks the received CS service information. In the case of a CS service not requiring the processing of the MS, the HSS transceiver 1006 stores the CS service information received from the HSS in the service information storage unit 1008.

Further, the processor 1004 modifies the IMS service request message by means of the CS service information stored in the service information storage unit 1008, and transfers the modified IMS service request message to the HSS transceiver 1006. The HSS transceiver 1006 transmits the received IMS service request message to a reception-side network.

However, in the case of a service requiring the processing of the MS, the processor 1004 transfers a response message including the CS service information to the MS transceiver 1002 for transmission to the MS. When the modified IMS service request message is received from the MS, the processor 1004 transfers the received IMS service request message to the HSS transceiver 1006 for transmission to the reception-side network.

According to exemplary embodiments of the present invention as described above, in an environment in which a CS service and an IMS service are simultaneously used, an IMS network acquires CS service information, so that it is possible to completely provide the characteristics of each service.

Although a number of exemplary embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for acquiring service information in an IP Multimedia Subsystem (IMS) network, the method comprising the steps of:
transferring, by a Mobile Station (MS), an IMS registration request message to the IMS network in order to use an IMS service, the MS supporting a CSI (Combinational CS (Circuit Switching) and IMS) service; and
receiving a response message corresponding to the IMS registration request message from the IMS network and checking service information included in the response message.

2. The method as claimed in claim 1, wherein the IMS registration request message comprises CSI indication representing that the MS supports the CSI service.

3. The method as claimed in claim 1, further comprising the step of, in a case of a service requiring processing of the MS as a result of checking the service information, storing the service information in order to process the service.

4. The method as claimed in claim 3, further comprising the step of, in the case of the service requiring the processing of the MS as a result of checking the service information, processing the stored service information and transmitting an IMS service request message comprising the processed service information to the IMS network.

5. The method as claimed in claim 1, wherein the service information comprises information on an identity restriction service of a CS network.

6. A method for acquiring service information in an IP Multimedia Subsystem (IMS) network, the method comprising the steps of:
receiving an IMS registration message for using an IMS service from a Mobile Station (MS) supporting a CSI (Combinational CS (Circuit Switching) and IMS) service;
after receiving the IMS registration message, generating a Server Assignment Request command (SAR) message for requesting subscriber information and service information for the MS, and transferring the SAR message to a Home Subscriber Server (HSS); and
receiving a response message comprising the subscriber information and the service information from the HSS.

7. The method as claimed in claim 6, wherein the IMS registration message comprises CSI indication when the MS supports the CSI service.

8. The method as claimed in claim 6, further comprising the step of, in a case of a service not requiring processing of the MS as a result of checking the service information, storing the service information received from the HSS.

9. The method as claimed in claim 8, further comprising the steps of:
when an IMS service request message is received from the MS, checking the stored service information; and
modifying the IMS service request message by the stored service information and transferring the modified IMS service request message to a reception-side network.

10. The method as claimed in claim 6, further comprising the step of, in a case of a service requiring a processing of the MS as a result of checking the service information, transmitting a response message comprising the service information to the MS.

11. The method as claimed in claim 10, further comprising the steps of:
receiving an IMS service request message, which comprises information on the service requiring the processing of the MS, from the MS; and
transferring the received IMS service request message to a reception-side network.

12. The method as claimed in claim 6, wherein the service information comprises information on an identity restriction service of a CS network.

13. An apparatus for acquiring service information in an IP Multimedia Subsystem (IMS) network, the apparatus comprising:
a message generator for generating, by a Mobile Station (MS), an IMS registration request message in order to use an IMS service, the MS supporting a CSI (Combinational CS (Circuit Switching) and IMS) service;
a transmitter for transmitting the IMS registration request message to an IMS network;
a receiver for receiving a response message corresponding to the registration request message from the IMS network; and
a processor for checking service information included in the response message.

14. The apparatus as claimed in claim 13, wherein the IMS registration request message comprises CSI indication representing that the MS supports the CSI service.

15. The apparatus as claimed in claim 13, further comprising, in a case of a service requiring processing of the MS according to the service information, a storage unit for storing the service information.

16. The apparatus as claimed in claim 15, wherein, in the case of the service requiring the processing of the MS as a result of checking the service information stored in the storage unit by the MS, the processor is configured to generate an IMS service request message including information on the service requiring the processing of the MS and transmit the IMS service request message to the IMS network through the transmitter.

17. The apparatus as claimed in claim 16, wherein the service information comprises information on an identity restriction service of a CS network.

18. An apparatus for acquiring service information in an IP Multimedia Subsystem (IMS) network, the apparatus comprising:
a Mobile Station (MS) transceiver for receiving an IMS registration message for using an IMS service from an MS supporting a CSI (Combinational CS (Circuit Switching) and IMS) service;
a processor for generating a Server Assignment Request command (SAR) message for requesting subscriber information and service information for the MS according to the IMS registration message; and
a Home Subscriber Server (HSS) transceiver for transmitting the SAR message to an HSS and receiving a Server Assignment Answer (SAA) message comprising the subscriber information and the service information from the HSS in response to the SAR message.

19. The apparatus as claimed in claim 18, wherein the IMS registration message comprises CSI indication when the MS supports the CSI service.

20. The apparatus as claimed in claim 18, further comprising, in a case of a service not requiring processing of the MS according to the service information, a storage unit for storing the service information received from the HSS.

21. The apparatus as claimed in claim 20, wherein the processor is configured to check the stored service information, modify an IMS service request message by the stored service information, and transmit the modified IMS service request message to a reception-side network.

22. The apparatus as claimed in claim 18, wherein, in a case of a service requiring processing of the MS as a result of checking the service information, the processor is configured to transmit a response message comprising the service information to the MS through the MS transceiver.

23. The apparatus as claimed in claim 18, further comprising, when the processor receives an IMS service request message, which comprises information on a service requiring processing of the MS, from the MS, a transmitter for transmitting the received IMS service request message to a reception-side network.

24. The apparatus as claimed in claim 18, wherein the service information comprises information on an identity restriction service of a CS network.
